(19) **Europäisches Patentamt / European Patent Office / Office européen des brevets**

(11) **EP 3 814 153 B1**

(12) **FASCICULE DE BREVET EUROPEEN**

(45) Date de publication et mention de la délivrance du brevet:
**12.04.2023 Bulletin 2023/15**

(21) Numéro de dépôt: **19734268.6**

(22) Date de dépôt: **11.06.2019**

(51) Classification Internationale des Brevets (IPC):
**B60C 23/04** *(2006.01)* **B60C 23/20** *(2006.01)*

(52) Classification Coopérative des Brevets (CPC):
**B60C 23/20; B60C 23/0476**

(86) Numéro de dépôt international:
**PCT/EP2019/065247**

(87) Numéro de publication internationale:
**WO 2020/001975 (02.01.2020 Gazette 2020/01)**

(54) **PROCÉDÉS DE DÉTECTION ET DE LOCALISATION D'UNE ANOMALIE THERMIQUE POUR ENSEMBLE MONTÉ DE VÉHICULE**

**VERFAHREN ZUR FESTSTELLUNG EINER THERMISCHEN ANOMALIE IN EINEM FAHRZEUGSYSTEM**

**METHOD OF DETECTION OF AN THERMICAL ANOMALY IN A SYSTEM AT A VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2018 FR 1855830**

(43) Date de publication de la demande:
**05.05.2021 Bulletin 2021/18**

(73) Titulaire: **COMPAGNIE GENERALE DES ETABLISSEMENTS MICHELIN**
**63000 Clermont-Ferrand (FR)**

(72) Inventeurs:
- **DOMPROBST, Frédéric**
  **63040 CLERMONT-FERRAND CEDEX 9 (FR)**
- **PILON, Vincent**
  **63040 CLERMONT-FERRAND CEDEX 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2015/044553 FR-A1- 2 680 135**
**US-A1- 2013 274 988**

**Description**

DOMAINE TECHNIQUE DE L'INVENTION

La présente invention se rapporte à un procédé de détection et de localisation d'une anomalie thermique pour un ensemble monté de véhicule muni d'un bandage pneumatique. Plus précisément, l'invention se propose de fournir des alertes pour garantir le fonctionnement optimal d'un véhicule. Les documents suivants WO 2015/044553 A1, FR 2 680 135 A1 et US 2013/274988 A1 peuvent être cités comme art antérieur.

ARRIÈRE-PLAN TECHNIQUE DE L'INVENTION

Il est connu de surveiller la pression des bandages pneumatiques d'un véhicule pour des questions normatives et sécuritaires. La surveillance de la pression est parfois également couplée avec celle de la température de la cavité interne du bandage pneumatique.

Ces surveillances sont destinées à informer le conducteur d'éventuelles variations jugées dangereuses des bandages pneumatiques du véhicule et/ou faire remonter au gestionnaire de la flotte à laquelle appartient le véhicule des caractéristiques des bandages pneumatiques du véhicule.

RÉSUMÉ DE L'INVENTION

L'invention a pour but de proposer un procédé capable de déterminer de nouvelles alertes relatives au véhicule à partir des surveillances de pression et de température déjà présentes sur les ensembles montés du véhicule.

À cet effet, l'invention se rapporte à un procédé de détection d'une anomalie thermique lors du roulage d'un ensemble monté de véhicule muni d'une roue de montage recevant un bandage pneumatique, selon les termes de la revendication 1.

Avantageusement, le procédé de détection permet donc de déterminer avec des mesures au niveau d'un ensemble monté si un échauffement anormal est présent au niveau d'un organe du véhicule qui est monté proche de l'ensemble monté. Un tel organe peut typiquement être tout ou partie d'un système de suspension, d'une chaîne de traction ou d'un système de freinage. À titre nullement limitatif, l'échauffement anormal dû au disfonctionnement de plaquettes de frein ou du refroidissement d'un moteur pourrait ainsi être détecté au niveau du capteur de l'ensemble monté. En effet, le capteur étant en contact par montage ou attache à la roue de montage, il est possible au capteur de s'affranchir de la loi de Gay-Lussac en ne détectant pas uniquement la température de l'air sous pression de l'ensemble monté mais également celle de la roue de montage généralement en matériau thermiquement conducteur comme par exemple en acier. Par conséquent, le procédé est simple à mettre en oeuvre et permet d'ajouter des aides à la maintenance et au bon fonctionnement du véhicule sans ajouter de nouveaux capteurs.

Préférentiellement selon l'invention, le rapport de surveillance correspond au rapport de la pression mesurée sur la température mesurée ce qui permet, par un calcul simple, de déterminer une anomalie thermique.

De plus, l'invention se rapporte à un procédé de localisation d'une anomalie thermique sur des ensembles montés d'un véhicule chacun muni d'une roue de montage recevant un bandage pneumatique, comme définie dans la revendication 3.

Avantageusement selon l'invention, le procédé de localisation permet de surveiller un à un l'environnement de chaque ensemble monté d'un véhicule. Typiquement, la surveillance peut être réalisée sur tous les ensembles montés du véhicule ou bien chaque ensemble monté d'une partie particulière du véhicule comme, par exemple, tous les ensembles montés d'un même essieu, uniquement de la partie motrice du véhicule (automobile, camion) ou encore uniquement de la partie tractée du véhicule (automobile, camion, caravane, remorque). De plus, comme chaque capteur est référencé par un identifiant, même si lors d'une maintenance les ensembles montés sont remplacés ou changés avec un autre, l'anomalie thermique sera toujours localisée sur le véhicule de la même manière.

L'invention peut également comporter l'une ou plusieurs des caractéristiques optionnelles suivantes, prises seules ou en combinaison.

Le procédé de localisation comportant, après l'étape de calcul de la différence, une étape de discrimination statistique permettant, à partir de la dispersion de la différence des rapports de surveillance du groupe de référence et de l'ensemble monté, de retirer les anomalies thermiques liées aux variations statistiques. En effet, les capteurs comportent une répétabilité (purement aléatoire) et une sensibilité à des usages différents (trajectoire, dévers, vitesse, etc.) entraînant une dispersion des mesures plus ou moins étendue. Le but de l'étape de discrimination statistique est d'éviter que cette dispersion intrinsèque à chaque capteur amène à conclure faussement à une anomalie thermique. En règle générale, les mesures de pression sont données à ± 0,1 bar et celles de température sont données à ± 3°C.

Selon une première variante dans laquelle on considère que la loi de distribution n'est pas forcément normale, l'étape de discrimination statistique comporte les phases destinées à déterminer deux quantiles d'ordres prédéterminés des valeurs obtenues lors des répétitions de l'étape de calcul de la différence entre les rapports de surveillance du groupe de référence et de l'ensemble monté comparé et utiliser les deux quantiles d'ordres prédéterminés respectivement comme un seuil supérieur et un seuil inférieur entre lesquels chaque valeur de la différence n'est pas considérée comme une anomalie thermique.

En effet, les quantiles permettent statistiquement d'immédiatement prendre en compte une plage prédéterminée dans laquelle on estime que la dispersion est induite par les précisions des mesures des capteurs de chaque ensemble monté ou de l'usage. Ainsi, un premier ordre prédéterminé formant le seuil inférieur peut être compris entre $10^{-4}$ et $10^{-1}$ et un second ordre prédéterminé, formant le seuil supérieur, peut être compris entre $1-10^{-4}$ et $1-10^{-1}$.

Selon une deuxième variante dans laquelle on considère que la loi de distribution est normale (loi gaussienne ou de loi de Laplace gauss), l'étape de discrimination statistique comporte la phase destinée à calculer l'écart type des valeurs obtenues lors des répétitions de l'étape de calcul de la différence entre les rapports de surveillance du groupe de référence et de l'ensemble monté comparé. En effet, l'écart type permet statistiquement d'immédiatement prendre en compte la dispersion induite par les précisions des mesures des capteurs de chaque ensemble monté et de l'usage. À partir de l'hypothèse ci-dessus de distribution normale, nous pouvons en déduire directement les quantiles associés.

L'étape de discrimination statistique peut alors déterminer, à partir de l'écart type des valeurs obtenues lors de l'étape de calcul de la différence, un seuil supérieur et un seuil inférieur entre lesquels chaque valeur de la différence n'est pas considérée comme une anomalie thermique. On détermine donc à l'avance la plage de valeurs pour lesquelles, on estime que les variations ne sont pas dues forcément à une anomalie thermique dans l'environnement de l'ensemble monté comparé.

Les seuils inférieur et supérieur correspondent à plus ou moins un facteur F multiplié à l'écart type des valeurs obtenues lors de l'étape de calcul de la différence, le facteur F étant compris entre 1 et 4. Ainsi, suivant l'application et le type de capteur, on adapte les seuils supérieur et inférieur entre lesquels chaque valeur de la différence n'est pas considérée comme une anomalie thermique. La détermination de ces seuils sont calculés à partir de la moyenne des mesures du processus plus ou moins le facteur F multiplié à de l'écart-type. Préférentiellement, la valeur moyenne ciblée est autour de zéro car il s'agit de la différence de deux indicateurs évoluant selon une dynamique proche à l'incertitude de mesure près et de l'usage.

Selon une troisième variante dans laquelle on souhaite centrer et réduire les courbes de différences, le procédé de localisation est répété au moins une fois afin de changer les conditions du roulage des ensembles montés. Puis, l'étape de discrimination statistique comporte les phases destinées à compiler les courbes selon chaque répétition du procédé, calculer la valeur moyenne et l'écart type de la différence entre les courbes selon chaque répétition du procédé, calculer une différence corrigée en soustrayant le calcul de différence de l'actuelle répétition à la valeur moyenne calculée, puis en divisant cette soustraction par l'écart type calculé afin de déterminer la différence corrigée qui est moins sensible à la répétabilité des mesures et à l'usage du véhicule, déterminer deux quantiles d'ordres prédéterminés des valeurs de différence corrigée et utiliser les deux quantiles d'ordres prédéterminés respectivement comme un seuil supérieur et un seuil inférieur entre lesquels chaque valeur de la différence n'est pas considérée comme une anomalie thermique.

En effet, la différence corrigée ainsi déterminée est moins sensible à la répétabilité des mesures et à l'usage du véhicule. Typiquement, entre deux roulages de trajet identiques ou différents, avec des ensembles montés identiques ou différents, il est possible d'obtenir une différence entre les courbes dont l'ordre de grandeur n'est pas du même niveau. Il est donc proposé de centrer et réduire la courbe de différence de manière à s'affranchir dans l'utilisation de la méthode, de l'ordre de grandeur de la différence, et donc de l'usage réalisé dans la base d'estimation.

De plus, les quantiles permettent statistiquement d'immédiatement prendre en compte une plage prédéterminée dans laquelle on estime que la dispersion est induite par les précisions des mesures des capteurs de chaque ensemble monté. Ainsi, un premier ordre prédéterminé formant le seuil inférieur peut être compris entre $10^{-4}$ et $10^{-1}$ et un second ordre prédéterminé, formant le seuil supérieur, peut être compris entre $1-10^{-4}$ et $1-10^{-1}$.

Enfin, le procédé de localisation comportant une étape finale d'envoi d'une alerte quand une anomalie thermique d'un des ensembles montés du véhicule est déterminée.

## BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :

- La figure 1 est une vue schématique de dessus d'un véhicule automobile comportant un procédé selon l'invention ;
- La figure 2 est une vue partielle en perspective d'une roue de montage munie d'un capteur apte à surveiller la pression et la température de la cavité interne d'un bandage pneumatique ;
- La figure 3 est une vue schématique en coupe d'un ensemble monté muni du capteur de la figure 2 ;
- La figure 4a est un diagramme montrant l'évolution du rapport de la pression sur la température mesurée par le capteur selon la figure 2 au cours du temps ;
- La figure 4b est un diagramme montrant l'évolution du signal de température du capteur de la figure 2 au cours du temps ;
- La figure 4c est un diagramme montrant l'évolution du signal de pression du capteur de la figure 2 au cours du temps ;
- La figure 5 est un diagramme montrant l'évolution habituelle au cours du temps du rapport de la pression sur la température d'un bandage pneumatique de référence par rapport à celui d'un autre bandage pneumatique du véhicule ;

- La figure 6 est un diagramme montrant la différence habituelle au cours du temps entre les deux rapports illustrés à la figure 5 ;
- La figure 7 est un diagramme montrant l'évolution anormale au cours du temps du rapport de la pression sur la température d'un bandage pneumatique de référence par rapport à celui d'un autre bandage pneumatique du véhicule ;
- La figure 8 est un diagramme montrant la différence anormale au cours du temps entre les deux rapports illustrés à la figure 7.

## DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Dans tout ce qui suit, les orientations sont les orientations habituelles d'un véhicule automobile. En particulier, les termes « supérieur », « inférieur », « gauche », « droit », « au-dessus », « en-dessous », « vers l'avant » et « vers l'arrière » s'entendent généralement par rapport au sens normal de circulation du véhicule automobile et à la position du conducteur.

Par « bandage pneumatique », on entend tous les types de bandages élastiques soumis à une pression interne. L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, « Poids-lourds » - c'est-à-dire métro, bus, engins de transport routier (camions, tracteurs, remorques), véhicules hors-la-route tels qu'engins agricoles ou de génie civil -, ou autres véhicules de transport ou de manutention. L'invention s'applique également aux véhicules non motorisés comme notamment une remorque, une semi-remorque ou une caravane.

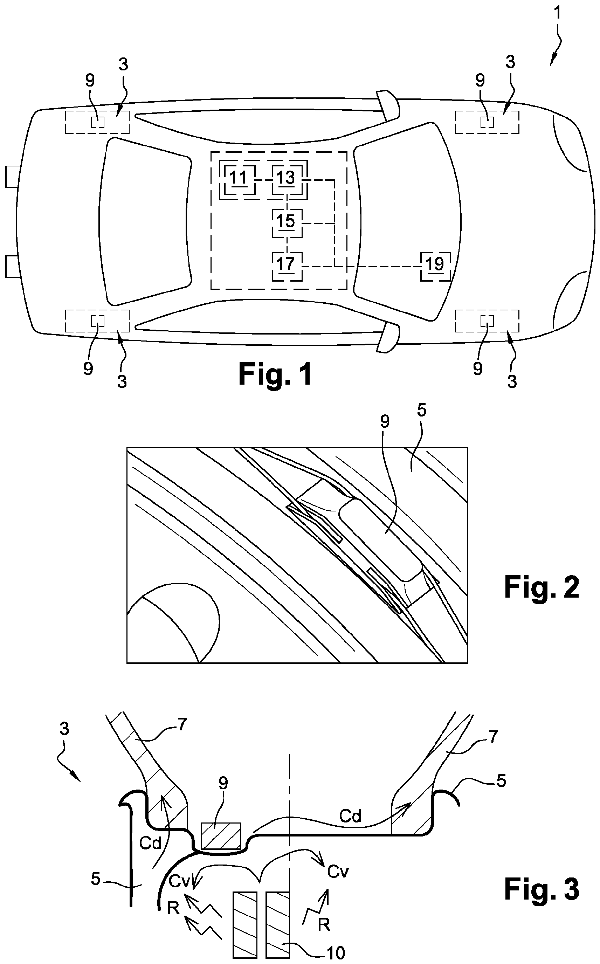

La figure 1 est une vue schématique de dessus d'un véhicule automobile 1 comportant quatre ensembles 3 montés. De manière habituelle, chaque ensemble 3 monté comporte une roue de montage 5 et un bandage pneumatique 7 comme illustré partiellement à la figure 3. Comme expliqué ci-dessus, notamment dans le cadre de la gestion de flotte comportant un ou plusieurs véhicules, il est connu de surveiller les pression P et température T internes de chaque ensemble 3 monté. Bien entendu, s'agissant d'une flotte, le véhicule peut ainsi être un véhicule motorisé ou non, ou les deux, comme, par exemple, un camion déplaçant une semi-remorque. Chaque ensemble 3 monté (moteur ou non) peut ainsi comporter un capteur 9 destiné à réaliser ces mesures.

Préférentiellement, le capteur 9 est attaché ou monté sur la roue 5 de montage, c'est-à-dire est en contact avec la roue 5 de montage comme illustré à la figure 2. Bien entendu, le montage du capteur 9 ne saurait se limiter à la paroi recevant le bandage pneumatique 7. En variante, le capteur 9 pourrait être en contact par montage sur la valve ou en dehors de la paroi recevant le bandage pneumatique 7 tel que le voile de la roue de montage 5.

Ces surveillances de flotte ont permis de découvrir que des capteurs 9 pouvaient envoyer des signaux de température parfois anormaux, c'est-à-dire qu'un ou plusieurs des signaux de température T émis par les capteurs 9 des ensembles 3 montés pouvaient envoyer un signal avec une grandeur plus élevée par rapport aux autres. Cette grandeur plus élevée peut être engendrée par une précision du capteur 9 différente des autres, c'est-à-dire parce qu'il mesure une valeur surestimée et/ou possède une trop grande variation de valeurs dans les mêmes conditions.

Après vérifications, de manière totalement inattendue, il a été trouvé que l'anomalie thermique était en fait due à un mauvais fonctionnement du système de freinage du véhicule 1. Plus précisément, les étriers défectueux ne relâchaient pas suffisamment les plaquettes de frein de leur disque 10 en générant un échauffement excessif de ce dernier. De fait, comme visible à la figure 3, par le rayonnement R et la convection Cv venant du disque 10 ainsi que par la conduction thermique Cd dans l'ensemble 3 monté, le capteur 9 mesure une valeur de température plus élevée que les autres capteurs 9. L'invention propose donc une méthode qui permette de déterminer si ces signaux de température parfois anormaux doivent faire l'objet d'une alerte.

Ainsi, l'invention se rapporte à un procédé de détection d'une anomalie thermique lors du roulage d'un ensemble 3 monté de véhicule 1 muni d'une roue de montage 5 recevant un bandage pneumatique 7. Le procédé de détection comporte une première étape destinée à mesurer les pression P et température T internes de l'ensemble 3 monté par un capteur 9 attaché à la roue de montage 5. Cette étape peut être réalisée à l'aide des capteurs 9 des ensembles 3 montés présents sur le véhicule 1. Comme visible à la figure 2, les capteurs 9 sont préférentiellement du type TPMS direct (abréviation provenant des termes anglais « Tire Pressure Monitoring System »). Afin de ne pas consommer trop d'énergie, les capteurs 9 peuvent transmettre leur mesure à intervalles réguliers ou non comme par exemple un intervalle compris entre 20 secondes et 30 minutes, et, préférentiellement entre 30 secondes et 1 minute ou, par exemple, 30 secondes, puis 1 minute, et à nouveau 30 secondes puis 1 minute, et ainsi de suite. De manière filaire ou non, un module 11 de traitement des signaux des capteurs 9 recueille et, préférentiellement, enregistre tous les signaux émis par les capteurs 9.

Le procédé de détection se poursuit avec une deuxième étape destinée à calculer un rapport de surveillance qui est fonction de la pression P mesurée et de la température T mesurée. De manière préférée, le rapport de surveillance correspond au rapport P/T de la pression P mesurée sur la température T mesurée.

En effet, en supposant qu'il n'y a aucune fuite d'air et la quantité de matière est constante, selon la loi de Gay-Lussac, chaque ensemble monté suit la relation suivante :

$$\frac{P1}{T1} = \frac{P2}{T2} = f(V, n)$$

- Où $V$ est le volume et $n$ la quantité de matière dans la cavité de l'ensemble 3 monté.

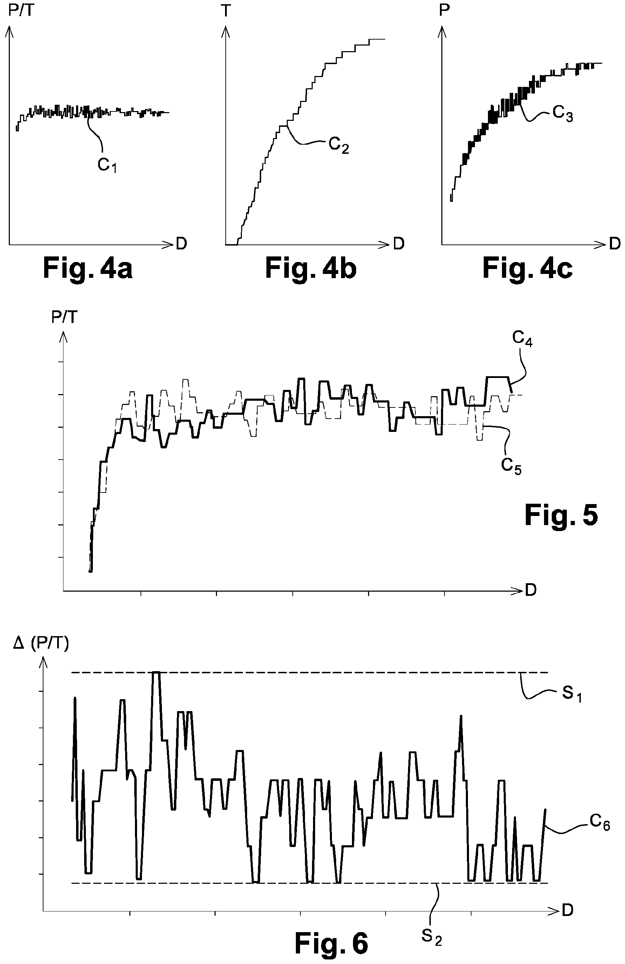

Empiriquement, comme visible aux figures 4a à 4c, même si la température T augmente (courbe $C_1$), la pression P également (courbe $C_2$). Par conséquent, la fonction $f(V,n)$ en condition normale reste sensiblement constante, c'est-à-dire le rapport P/T (courbe $C_3$) de la pression P sur la température T devrait rester constant. Préférentiellement, il est donc vérifié si ce rapport P/T reste sensiblement contant ou non. En effet, le capteur 9 étant attaché à, c'est-à-dire en contact avec, la roue 5 de montage, il lui est possible de s'affranchir de la loi de Gay-Lussac en ne détectant pas uniquement la température de l'air sous pression de l'ensemble 3 monté mais sa propre température induite par la conduction thermique de la roue 5 de montage elle-même soumise aux rayonnement R, convection Cv et conduction thermique Cd.

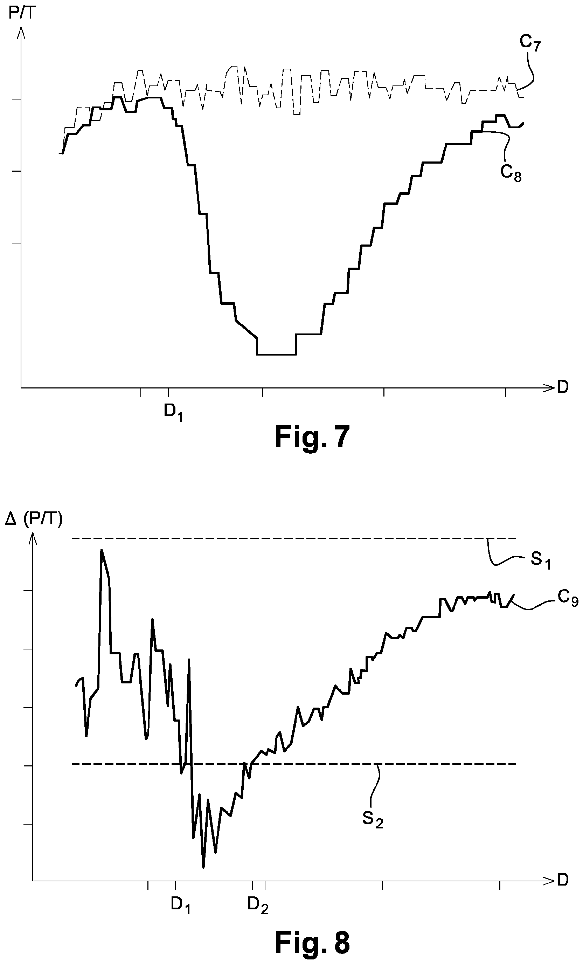

Cette deuxième étape peut être réalisée à l'aide d'un module 13 de calcul du rapport de surveillance. En effet, comme visible à la courbe C8 de la figure 7, une anomalie thermique est rapidement détectable du fait que la courbe C8 décroit rapidement, c'est-à-dire que la température T augmente plus rapidement que la pression P. On est alors plus certain que par un calcul simple de déterminer une anomalie thermique et non une variation de précision du capteur 9.

Le procédé de détection répète les première et deuxième étapes ce qui permet de suivre l'évolution de la valeur du rapport de surveillance et, incidemment, de déterminer une éventuelle anomalie thermique. Les répétitions peuvent être réalisées à intervalles réguliers comme, par exemple, un intervalle compris entre 20 secondes et 30 minutes, et, préférentiellement entre 30 secondes et 1 minutes. Le procédé de détection peut ainsi comporter une étape finale d'envoi d'une alerte quand une anomalie thermique d'un des ensembles 3 montés du véhicule est déterminée (à partir de $D_1$ sur la courbe $C_8$ de la figure 7) ou, alternativement, à partir de plusieurs anomalies consécutives comme, par exemple, entre 2 et 10 anomalies consécutives suivant la fréquence d'échantillonnage. Plus précisément, Le procédé de détection peut envoyer une alerte d'anomalie thermique sur le réseau 19 de bord du véhicule 1 pour la transmettre au gestionnaire de la flotte du véhicule 1 et/ou pour l'afficher au conducteur du véhicule 1.

Avantageusement, le procédé de détection permet donc de déterminer avec des mesures au niveau d'un ensemble 3 monté si un échauffement anormal est présent au niveau d'un organe du véhicule 1 qui est monté proche de l'ensemble 3 monté. Un tel organe peut typiquement être tout ou partie d'un système de suspension, d'une chaîne de traction ou d'un système de freinage. À titre nullement limitatif, l'échauffement anormal dû au disfonctionnement de plaquettes de frein comme expliqué ci-dessus ne saurait être la seule source d'échauffement. À titre d'exemple, l'échauffement pourrait également provenir d'un refroidissement défectueux d'un moteur logé dans la roue de montage 5. Au vu de ce qui précède, on comprend que le procédé est simple à mettre en oeuvre et qu'il permet d'ajouter des aides à la maintenance et au bon fonctionnement du véhicule sans ajouter de nouveaux capteurs.

L'invention propose également une méthode encore plus affinée pour déterminer si ces signaux de température parfois anormaux doivent faire l'objet d'une alerte. Ainsi, l'invention se rapporte à un procédé de localisation d'une anomalie thermique sur des ensembles 3 montés d'un véhicule 1 chacun muni d'une roue de montage 5 recevant un bandage pneumatique 7.

Le procédé de localisation comporte une première étape destinée à mettre en oeuvre le procédé de détection d'une anomalie thermique tel que présenté plus haut sur un groupe de référence comprenant au moins un ensemble 3 monté choisi parmi les ensembles 3 montés du véhicule 1, le rapport de surveillance étant une fonction de chacun des ensembles 3 montés du groupe de référence. On comprend donc que le rapport de surveillance (courbe $C_4$ de la figure 5) du groupe de référence peut être obtenu à partir d'un ou plusieurs ensembles 3 montés appartenant, par exemple, au même essieu ou au même véhicule 1. Bien entendu, dans le cas de plusieurs ensembles 3 montés, une moyenne arithmétique des mesures et/ou du rapport de surveillance de chaque ensemble 3 monté du groupe de référence peut être effectuée.

Ensuite, en même temps que la première étape (ou avant ou après), le procédé de localisation comporte une deuxième étape destinée à mettre en oeuvre le procédé de détection d'une anomalie thermique tel que présenté plus haut sur un ensemble 3 monté à comparer du véhicule 1 n'appartenant pas au groupe de référence. Le but est de vérifier un à un chaque environnement thermique des ensembles 3 montés du véhicule 1 et de pouvoir discriminer l'éventuel usage particulier du véhicule 1 en comparant son rapport de surveillance (courbe $C_5$ de la figure 5) avec celui (courbe $C_4$ de la figure 5) du groupe de référence.

Le procédé de localisation exécute ensuite une troisième étape destinée à calculer la différence $\Delta(P/T)$ entre les rapports P/T de surveillance du groupe de référence et l'ensemble 3 monté comparé au cours des répétitions. Cette troisième étape peut être mise en oeuvre par un module 15 de calcul de la différence $\Delta$(P/T) des rapports P/T pour obtenir, par exemple, la courbe $C_6$ illustrée à la figure 6.

Par rapport aux figures 4a à 4c, il faut comprendre que les figures 5 et 6 travaillent avec des précisions beaucoup plus grandes, c'est-à-dire que le procédé de localisation travaille de manière beaucoup plus fine. Les échelles des figures 5 et 6 sont ainsi considérablement plus grandes que celles des figures 4a à 4c.

Cette troisième étape permet de rapidement déterminer si une anomalie thermique n'est pas due à un usage particulier du véhicule 1 et si elle provient du groupe de référence ou de l'ensemble 3 monté comparé. On permet donc une localisation d'une éventuelle anomalie thermique par comparaison. Le procédé de localisation peut ainsi comporter une étape finale d'envoi d'une alerte quand une anomalie thermique d'un des ensembles 3 montés du véhicule est déterminée (à partir de $D_1$ sur la courbe $C_8$ de la figure 7) ou, alternativement, à partir de plusieurs anomalies consécutives comme, par exemple, entre 2 et 10 anomalies consécutives suivant la fréquence d'échantillonnage. Plus précisément, Le procédé de localisation peut envoyer une alerte d'anomalie thermique sur le réseau 19 de bord du véhicule 1 pour la transmettre au gestionnaire de la flotte du véhicule 1 et/ou pour l'afficher au conducteur du véhicule 1.

Avantageusement, le procédé de localisation permet de surveiller un à un l'environnement de chaque ensemble 3 monté d'un véhicule 1. Typiquement, la surveillance peut être réalisée sur tous les ensembles 3 montés du véhicule 1 ou bien chaque ensemble 3 monté d'une partie particulière du véhicule 1 comme, par exemple, tous les ensembles 3 montés d'un même essieu, uniquement les ensembles 3 montés moteurs du véhicule 1 (camion, automobile) ou encore uniquement les ensembles 3 montés tractés du véhicule 1 (camion, automobile, remorque, caravane).

De plus, comme chaque capteur 9 est référencé par un identifiant, même si lors d'une maintenance les ensembles 3 montés sont remplacés ou changés avec un autre, l'anomalie thermique sera toujours localisée sur le véhicule 1 de la même manière. Plus précisément, on peut retrouver la position correspondant à l'identifiant en interrogeant les capteurs 9 des ensembles 3 montés par son système de communication dédié lors d'une maintenance préventive (vérification des organes du véhicule 1 autour de l'ensemble 3 monté qui a été identifié) suite à la réception de l'alerte d'anomalie thermique sur le réseau 19 de bord du véhicule 1 puis à la transmission au gestionnaire de la flotte du véhicule 1 et/ou à l'afficher au conducteur du véhicule 1.

De manière préférée, le procédé de localisation comporte, après la troisième étape de calcul de la différence $\Delta$(P/T), une quatrième étape de discrimination statistique permettant, à partir de la dispersion de la différence des rapports de surveillance et/ou des mesures des pression P et température T internes de chaque ensemble 3 monté, de retirer les anomalies thermiques liées aux variations statistiques induites par les calculs et/ou les mesures. Cette quatrième étape peut être mise en oeuvre par un module 17 de calcul statistique pour obtenir, par exemple, les seuils $S_1$ et $S_2$ illustrés aux figures 6 et 8 entre lesquels les différences des rapports de surveillance sont jugés comme « normales ».

En effet, les modules 11, 13, 15 et les capteurs 9 comportent une répétabilité (purement aléatoire) et une sensibilité à des usages différents (trajectoire, dévers, charge, vitesse, etc.) entraînant une dispersion plus ou moins étendue. Le but de l'étape de discrimination statistique est d'éviter que cette dispersion, intrinsèque aux éléments utilisés pour la mise en oeuvre du procédé, amène à conclure faussement à une anomalie thermique. En règle générale, les mesures de pression sont données à $\pm$ 0,1 bar et, celles de température, à $\pm$ 3°C.

Selon une première variante dans laquelle on considère que la loi de distribution n'est pas forcément normale, l'étape de discrimination statistique comporte une première phase destinée à déterminer deux quantiles $q_\alpha$, $q_{1-\alpha}$ d'ordres prédéterminés $\alpha$, $1-\alpha$ des valeurs (courbes $C_4$ et/ou $C_5$ et/ou $C_6$ des figures 5 et 6) obtenues lors des répétitions de l'étape de calcul de la différence $\Delta$(P/T) entre les rapports P/T de surveillance du groupe de référence et de l'ensemble monté comparé.

La valeur $\alpha$ peut ainsi être comprise entre $10^{-4}$ et $10^{-1}$. La valeur $\alpha$ peut, par exemple, être égale à 0,0001, 0,0005, 0,001, 0,005, 0,0075, 0,01, 0,015, 0,02, 0,05 ou 0,1 suivant la probabilité souhaitée de risque de fausse détection d'anomalie thermique. De manière préférée, la valeur $\alpha$ est égale à $10^{-2}$.

Une deuxième phase de la première variante est destinée à utiliser les deux quantiles $q_\alpha$, $q_{1-\alpha}$ d'ordres prédéterminés $\alpha$, $1-\alpha$ respectivement comme un seuil supérieur $S_1$ et un seuil inférieur $S_2$ entre lesquels chaque valeur de la différence n'est pas considérée comme une anomalie thermique. Par conséquent, un premier ordre $\alpha$ prédéterminé peut former le seuil inférieur $S_2$ compris entre $10^{-4}$ et $10^{-1}$ et un second ordre $1-\alpha$ prédéterminé peut former le seuil supérieur $S_1$ compris entre $1-10^{-4}$ et $1-10^{-1}$.

En effet, les quantiles permettent statistiquement d'immédiatement prendre en compte une plage prédéterminée dans laquelle on estime que la dispersion est induite par les précisions des mesures des capteurs 9 de chaque ensemble 3 monté. Par conséquent, plus la valeur $\alpha$ est grande, moins on est sélectif, au risque de détecter des anomalies thermiques qui n'en sont pas. De manière inverse, plus la valeur $\alpha$ est petite, plus on est sélectif, au risque de ne pas systématiquement détecter les anomalies thermiques.

Selon une deuxième variante dans laquelle on considère que la loi de distribution est normale, l'étape de discrimination statistique comporte la phase destinée à calculer l'écart type $\sigma$ (« sigma ») des valeurs (courbes $C_4$ et/ou $C_5$ et/ou $C_6$ des figures 5 et 6) obtenues lors des répétitions de l'étape de calcul de la différence $\Delta$(P/T) entre les rapports de surveillance du groupe de référence et de l'ensemble 3 monté comparé. En effet, l'écart type $\sigma$ permet statistiquement d'immédiatement prendre en compte la dispersion induite par les précisions des signaux de chaque ensemble 3 monté.

L'étape de discrimination statistique permet de déterminer, à partir de l'écart type $\sigma$ des valeurs obtenues lors de l'étape de calcul de la différence $\Delta(P/T)$, un seuil supérieur $S_1$ et un seuil inférieur $S_2$ entre lesquels chaque valeur de la différence $\Delta(P/T)$ n'est pas considérée comme une anomalie thermique. On détermine donc à l'avance la plage de valeurs pour lesquelles, on estime que les variations de la différence $\Delta(P/T)$ ne sont pas dues forcément à une anomalie thermique dans l'environnement de l'ensemble 3 monté comparé. On comprend donc que, suivant le seuil $S_1$, $S_2$ qui est dépassé, on détermine si c'est le rapport de surveillance du groupe de référence ou celui de l'ensemble 3 monté comparé qui comporte une anomalie thermique.

Préférentiellement, les seuils inférieur et supérieur $S_1$, $S_2$ correspondent à plus ou moins un facteur F multiplié à l'écart type ($\pm F.\sigma$) des valeurs obtenues lors de l'étape de calcul de la différence, le facteur F étant compris entre 1 et 4. À titre d'exemple, le facteur F pourrait ainsi être compris entre 2 et 3 comme, par exemple, égal à 2, 2,1, 2,2, 2,3, 2,4, 2,5, 2,6, 2,7, 2,8, 2,9 ou 3. Ainsi, suivant l'application, l'ensemble 3 monté et le type de capteur 9, on adapte les seuils supérieur et inférieur $S_1$, $S_2$ entre lesquels chaque valeur de la différence $\Delta(P/T)$ n'est pas considérée comme une anomalie thermique. Plus précisément, plus le facteur F est grand, plus on est sélectif, au risque de ne pas systématiquement détecter les anomalies thermiques. De manière inverse, plus le facteur F est petit, moins on est sélectif, au risque de détecter des anomalies thermiques qui n'en sont pas.

Selon une troisième variante dans laquelle on souhaite centrer et réduire les courbes de différences, le procédé de localisation est répété au moins une fois et, préférentiellement, plusieurs fois afin d'obtenir différentes conditions du roulage des ensembles 3 montés. En outre, l'étape de discrimination statistique comporte une première phase destinée à compiler les courbes selon chaque répétition du procédé de localisation puis une deuxième phase destinée à calculer la valeur moyenne $\bar{x}$ et l'écart type $\sigma$ de la différence entre les courbes selon chaque répétition du procédé.

Une troisième phase est destinée à calculer une différence $\Delta(P/T)$ corrigée en soustrayant le calcul de différence $\Delta(P/T)$ de l'actuelle répétition à la valeur moyenne $\bar{x}$ calculée, puis en divisant cette soustraction par l'écart type $\sigma$ calculé afin de déterminer la différence $\Delta(P/T)$ corrigée. La différence $\Delta(P/T)$ corrigée ainsi déterminée est moins sensible à la répétabilité des mesures et à l'usage du véhicule. Typiquement, entre deux roulages de trajet identiques ou différents, avec des ensembles 3 montés identiques ou différents, il est possible d'obtenir une différence entre les courbes dont l'ordre de grandeur n'est pas du même niveau. Il est donc proposé de centrer et réduire la courbe de différence de manière à s'affranchir dans l'utilisation de la méthode, de l'ordre de grandeur de la différence, et donc de l'usage réalisé dans la base d'estimation (courbe $C_9$ de la figure 8).

Comme dans la première variante, la troisième variante comporte également une quatrième phase destinée à déterminer deux quantiles $q_\alpha$, $q_{1-\alpha}$ d'ordres prédéterminés $\alpha$, $1-\alpha$ des valeurs de différence $\Delta(P/T)$ corrigée et, d'utiliser les deux quantiles $q_\alpha$, $q_{1-\alpha}$ d'ordres prédéterminés $\alpha$, $1-a$, dans une dernière phase, respectivement comme un seuil supérieur $S_1$ et un seuil inférieur $S_2$ entre lesquels chaque valeur de la différence n'est pas considérée comme une anomalie thermique.

La valeur $\alpha$ peut ainsi être comprise entre $10^{-4}$ et $10^{-1}$. La valeur $\alpha$ peut, par exemple, être égale à 0,0001, 0,0005, 0,001, 0,005, 0,0075, 0,01, 0,015, 0,02, 0,05 ou 0,1 suivant la probabilité souhaitée de risque de fausse détection d'anomalie thermique. De manière préférée, la valeur $\alpha$ est égale à $10^{-2}$. Par conséquent, un premier ordre $\alpha$ prédéterminé peut former le seuil inférieur $S_2$ compris entre $10^{-4}$ et $10^{-1}$ et un second ordre $1-\alpha$ prédéterminé peut former le seuil supérieur $S_1$ compris entre $1-10^{-4}$ et $1-10^{-1}$.

Avantageusement, les quantiles $q_\alpha$, $q_{1-\alpha}$ permettent statistiquement d'immédiatement prendre en compte une plage prédéterminée dans laquelle on estime que la dispersion est induite par les précisions des mesures des capteurs 9 de chaque ensemble 3 monté. Par conséquent, plus la valeur $\alpha$ est grande, moins on est sélectif, au risque de détecter des anomalies thermiques qui n'en sont pas. De manière inverse, plus la valeur $\alpha$ est petite, plus on est sélectif, au risque de ne pas systématiquement détecter les anomalies thermiques.

Le procédé de localisation selon la première, deuxième ou troisième variante peut ainsi comporter une étape finale d'envoi d'une alerte quand une anomalie thermique d'un des ensembles 3 montés du véhicule 1 est déterminée (entre $D_1$ et $D_2$ sur la courbe $C_9$ de la figure 8 par dépassement du seuil $S_2$) ou, alternativement, à partir de plusieurs anomalies consécutives comme, par exemple, entre 2 et 10 anomalies consécutives suivant la fréquence d'échantillonnage. À titre d'exemple, l'envoi d'une alerte pourrait être envoyée à partir d'une répétition de détection d'une anomalie thermique (par exemple entre deux et dix anomalies) dans un temps donné (par exemple au cours des dix dernières minutes). Plus précisément, le procédé de localisation peut envoyer une alerte d'anomalie thermique sur le réseau 19 de bord du véhicule 1 pour la transmettre au gestionnaire de la flotte du véhicule 1 et/ou pour l'afficher au conducteur du véhicule 1.

L'invention n'est pas limitée aux modes de réalisation et variantes présentés et d'autres modes de réalisation et variantes apparaîtront clairement à l'homme du métier. Il est notamment possible d'adapter le procédé de détection et/ou le procédé de localisation en fonction de l'organe du véhicule 1 à surveiller. Ainsi, les seuils $S_1$, $S_2$ pourraient, par exemple, prendre en compte l'interstice entre le diamètre extérieur du disque 10 de frein et le diamètre intérieur de la roue 5 de montage.

En variante ou de manière additionnelle, le procédé de détection et/ou le procédé de localisation pourrait également prendre en compte uniquement la détection des ensembles 3 montés qui touchent effectivement la route afin de ne pas surveiller un éventuel essieu relevé par exemple d'une remorque.

Enfin, il est notamment possible de réaliser les procédés à l'aide d'un flux indirect de l'information via un serveur où sont pratiqués des traitements statistiques sur l'historique de l'information et une analyse de données massives qui permettraient de traiter la problématique d'évolution du rapport de surveillance en utilisant des sources d'information à distance. À titre d'exemple, un traitement des données massives avec une gestion de l'historique pourrait être réalisé pour intégrer les effets de l'usure des ensembles 3 montés, de la charge des ensembles 3 montés, de la vitesse du véhicule 1, des caractéristiques (sinuosité, déclivité, etc.) de la route que rencontre le véhicule 1 ou encore de l'adhérence des ensembles 3 montés sur la valeur du rapport de surveillance. En effet, il pourrait par exemple être utilisé un dispositif extérieur au véhicule de mesure de l'usure qui lorsque le véhicule 1 est en entretien ou passe par un portique de détection automatique incrémente le nombre de kilomètres effectué par les bandages pneumatiques 7.

Selon un autre exemple, une carte datée des informations mesurées sur le véhicule ou d'autres véhicules équipés du même dispositif pourrait être réalisée. Ainsi, chaque mesure pourrait être envoyée à un serveur contenant l'information de la valeur mesurée, de la géolocalisation de la route sur laquelle la mesure a été faite, de la date de mesure (jour, heure, minute) et d'autres paramètres mesurés (tels que par exemple la charge par essieu, la vitesse, l'accélération ou le devers). Un traitement des données massives pourrait ensuite être effectués pour mieux estimer la loi des rapports de surveillance. Par conséquent, par la méthode précédente ou toute autre méthode se basant sur ces informations, l'estimation des seuils de détection d'anomalie probable serait plus fine. Il serait également possible de distinguer des familles de véhicules et/ou d'usages à partir de ces données massives en utilisant des méthodes de statistiques, de machine d'apprentissage, d'intelligence artificielle pour faire cette segmentation (également appelé « clustering »). Pour chaque segment, la démarche précédente ou une démarche similaire adaptée peut être mise en oeuvre. Une segmentation supplémentaire pourrait être obtenue par la connaissance de l'usure, connaissance seule ou associé à d'autres paramètres. Cette connaissance de l'usure pourrait être réalisée lorsque le véhicule est en entretien, passe par un portique ou est instrumenté d'un dispositif extérieur.

**Revendications**

1. Procédé de détection d'une anomalie thermique lors du roulage d'un ensemble (3) monté de véhicule (1) muni d'une roue de montage (5) recevant un bandage pneumatique (7), **caractérisé en ce qu'**il comporte les étapes suivantes :

   - mesurer les pression (P) et température (T) internes de l'ensemble (3) monté par un capteur (9) attaché à la roue de montage (5) ;
   - calculer un rapport (P/T) de surveillance qui est fonction de la pression (P) mesurée et de la température (T) mesurée ;
   - répéter les étapes précédentes et suivre l'évolution de la valeur du rapport de surveillance afin de déterminer une anomalie thermique quand la température interne de l'ensemble (3) monté augmente plus rapidement que la pression interne de l'ensemble (3) monté.

2. Procédé de détection selon la revendication précédente, dans lequel le rapport (P/T) de surveillance correspond au rapport de la pression (P) mesurée sur la température (T) mesurée.

3. Procédé de localisation d'une anomalie thermique sur des ensembles (3) montés d'un véhicule (1) chacun muni d'une roue de montage (5) recevant un bandage pneumatique (7), **caractérisé en ce qu'**il comporte les étapes suivantes :

   - mettre en oeuvre le procédé de détection d'une anomalie thermique selon l'une quelconque des revendications précédentes sur un groupe de référence comprenant au moins un ensemble (3) monté choisi parmi les ensembles (3) montés du véhicule (1), le rapport (P/T) de surveillance étant une fonction de chacun des ensembles (3) montés du groupe de référence ;
   - mettre en oeuvre le procédé de détection d'une anomalie thermique selon l'une quelconque des revendications précédentes sur un ensemble (3) monté à comparer du véhicule (1) n'appartenant pas au groupe de référence ;
   - calculer la différence ($\Delta$(P/T)) entre les rapports (P/T) de surveillance du groupe de référence et l'ensemble (3) monté comparé au cours des répétitions afin de déterminer si une anomalie thermique provient du groupe de référence ou de l'ensemble (3) monté comparé.

4. Procédé de localisation selon la revendication précédente, comportant, après l'étape de calcul de la différence ($\Delta$(P/T)), une étape de discrimination statistique permettant, à partir de la dispersion de la différence des rapports (P/T) de surveillance du groupe de référence et de l'ensemble (3) monté comparé, de retirer les anomalies thermiques liées aux variations statistiques.

**5.** Procédé de localisation selon la revendication précédente, dans lequel l'étape de discrimination statistique comporte les phases suivantes :

- déterminer deux quantiles $(q_\alpha, q_{1-\alpha})$ d'ordres prédéterminés $(\alpha, 1-\alpha)$ des valeurs obtenues lors des répétitions de l'étape de calcul de la différence $(\Delta(P/T))$ entre les rapports $(P/T)$ de surveillance du groupe de référence et de l'ensemble monté comparé ;
- utiliser les deux quantiles $(q_\alpha, q_{1-\alpha})$ d'ordres prédéterminés $(\alpha, 1-\alpha)$ respectivement comme un seuil supérieur $(S_1)$ et un seuil inférieur $(S_2)$ entre lesquels chaque valeur de la différence $(\Delta(P/T))$ n'est pas considérée comme une anomalie thermique.

**6.** Procédé selon la revendication précédente, dans lequel les ordres prédéterminés $(\alpha, 1-\alpha)$ sont respectivement compris entre $10^{-4}$ et $10^{-1}$ et entre $1-10^{-4}$ et $1-10^{-1}$.

**7.** Procédé de localisation selon la revendication 4, dans lequel l'étape de discrimination statistique comporte la phase suivante :

- Calculer l'écart type $(\sigma)$ des valeurs obtenues lors des répétitions de l'étape de calcul de la différence $(\Delta(P/T))$ entre les rapports $(P/T)$ de surveillance du groupe de référence et de l'ensemble monté comparé.

**8.** Procédé de localisation selon la revendication précédente, dans lequel l'étape de discrimination statistique détermine, à partir de l'écart type $(\sigma)$ des valeurs obtenues lors de l'étape de calcul de la différence $(\Delta(P/T))$, un seuil supérieur $(S_1)$ et un seuil inférieur $(S_2)$ entre lesquels chaque valeur de la différence $(\Delta(P/T))$ n'est pas considérée comme une anomalie thermique.

**9.** Procédé de localisation selon la revendication précédente, dans lequel les seuils inférieur et supérieur $(S_1, S_2)$ correspondent à plus ou moins un facteur F multiplié à l'écart type $(\sigma)$ des valeurs obtenues lors de l'étape de calcul de la différence $(\Delta(P/T))$, le facteur F étant compris entre 1 et 4.

**10.** Procédé de localisation selon la revendication 4, qui est répété au moins une fois afin de changer les conditions du roulage des ensembles (3) montés, l'étape de discrimination statistique comportant les phases suivantes :

- compiler les courbes selon chaque répétition du procédé ;
- calculer la valeur moyenne $(\bar{x})$ et l'écart type $(\sigma)$ de la différence entre les courbes selon chaque répétition du procédé ;
- calculer une différence corrigée en soustrayant le calcul de différence $(\Delta(P/T))$ de l'actuelle répétition à la valeur moyenne $(\bar{x})$ calculée, puis en divisant cette soustraction à l'écart type $(\sigma)$ calculé afin de déterminer la différence corrigée qui est moins sensible à la répétabilité des mesures et à l'usage du véhicule ;
- déterminer deux quantiles $(q_\alpha, q_{1-\alpha})$ d'ordres prédéterminés $(\alpha, 1-\alpha)$ des valeurs de différence corrigée ;
- utiliser les deux quantiles $(q_\alpha, q_{1-\alpha})$ d'ordres prédéterminés $(\alpha, 1-\alpha)$ respectivement comme un seuil supérieur $(S_1)$ et un seuil inférieur $(S_2)$ entre lesquels chaque valeur de la différence $(\Delta(P/T))$ n'est pas considérée comme une anomalie thermique.

**11.** Procédé selon la revendication précédente, dans lequel les ordres prédéterminés $(\alpha, 1-\alpha)$ sont respectivement compris entre $10^{-4}$ et $10^{-1}$ et entre $1-10^{-4}$ et $1-10^{-1}$.

**12.** Procédé de localisation selon l'une quelconque des revendications 3 à 11, comportant une étape finale d'envoi d'une alerte quand une anomalie thermique d'un des ensembles (3) montés du véhicule est déterminée.

**Patentansprüche**

**1.** Verfahren zur Feststellung einer thermischen Anomalie beim Rollen einer montierten Einheit (3) eines Fahrzeugs (1), die mit einem Montagerad (5) versehen ist, das einen Luftreifen (7) aufnimmt, **dadurch gekennzeichnet, dass** es die folgenden Schritte umfasst:

- Messen des inneren Drucks (P) und der inneren Temperatur (T) der montierten Einheit (3) durch einen Sensor (9), der am Montagerad (5) angebracht ist;
- Berechnen eines Überwachungsverhältnisses (P/T), das vom gemessenen Druck (P) und von der gemessenen Temperatur (T) abhängig ist;
- Wiederholen der vorhergehenden Schritte und Verfolgen der Entwicklung des Werts des Überwachungsverhältnisses, um eine thermische Anomalie zu bestimmen, wenn die Innentemperatur der montierten Einheit (3) schneller als der Innendruck der montierten Einheit (3) ansteigt.

**2.** Feststellungsverfahren nach dem vorhergehenden Anspruch, wobei das Überwachungsverhältnis (P/T) dem Verhältnis des gemessenen Drucks (P) zur gemessenen Temperatur (T) entspricht.

3. Verfahren zur Lokalisierung einer thermischen Anomalie an montierten Einheiten (3) eines Fahrzeugs (1), die jeweils mit einem Montagerad (5) versehen sind, das einen Luftreifen (7) aufnimmt, **dadurch gekennzeichnet, dass** es die folgenden Schritte umfasst:

   - Durchführen des Verfahrens zur Feststellung einer thermischen Anomalie nach einem der vorhergehenden Ansprüche an einer Referenzgruppe, die wenigstens eine montierte Einheit (3) umfasst, die aus den montierten Einheiten (3) des Fahrzeugs (1) gewählt ist, wobei das Überwachungsverhältnis (P/T) eine Funktion jeder der montierten Einheiten (3) der Referenzgruppe ist;
   - Durchführen des Verfahrens zur Feststellung einer thermischen Anomalie nach einem der vorhergehenden Ansprüche an einer zu vergleichenden montierten Einheit (3) des Fahrzeugs (1), die nicht zur Referenzgruppe gehört;
   - Berechnen der Differenz ($\Delta$(P/T)) zwischen den Überwachungsverhältnissen (P/T) der Referenzgruppe und der montierten Einheit (3), die im Verlauf der Wiederholungen verglichen wird, um zu bestimmen, ob eine thermische Anomalie von der Referenzgruppe oder der verglichenen montierten Einheit (3) herrührt.

4. Lokalisierungsverfahren nach dem vorhergehenden Anspruch, aufweisend, nach dem Schritt des Berechnens der Differenz ($\Delta$(P/T)), einen Schritt des statistischen Diskriminierens, der es gestattet, anhand der Streuung der Differenz der Überwachungsverhältnisse (P/T) der Referenzgruppe und der verglichenen montierten Einheit (3) die thermischen Anomalien zu entfernen, die mit den statistischen Variationen in Verbindung stehen.

5. Lokalisierungsverfahren nach dem vorhergehenden Anspruch, wobei der Schritt des statistischen Diskriminierens die folgenden Phasen aufweist:

   - Bestimmen zweier Quantile ($q_\alpha$, $q_{1-\alpha}$) vorbestimmter Ordnungen ($\alpha$, $1-\alpha$) der Werte, die bei den Wiederholungen des Schritts des Berechnens der Differenz ($\Delta$(P/T)) zwischen den Überwachungsverhältnissen der Referenzgruppe und der verglichenen montierten Einheit erhalten werden;
   - Nutzen der zwei Quantile ($q_\alpha$, $q_{1-\alpha}$) vorbestimmter Ordnungen ($\alpha$, $1-\alpha$) als eine obere Schwelle ($S_1$) bzw. eine untere Schwelle ($S_2$), zwischen denen jeder Wert der Differenz ($\Delta$(P/T)) nicht als eine thermische Anomalie erachtet wird.

6. Verfahren nach dem vorhergehenden Anspruch, wobei die vorbestimmten Ordnungen ($\alpha$, $1-\alpha$) zwischen $10^{-4}$ und $10^{-1}$ bzw. zwischen $1-10^{-4}$ und $1-10^{-1}$ liegen.

7. Lokalisierungsverfahren nach Anspruch 4, wobei der Schritt des statistischen Diskriminierens die folgende Phase aufweist:

   - Bestimmen der Standardabweichung ($\sigma$) der Werte, die bei den Wiederholungen des Schritts des Berechnens der Differenz ($\Delta$(P/T)) zwischen den Überwachungsverhältnissen der Referenzgruppe und der verglichenen montierten Einheit erhalten werden.

8. Lokalisierungsverfahren nach dem vorhergehenden Anspruch, wobei der Schritt des statistischen Diskriminierens anhand der Standardabweichung ($\sigma$) der Werte, die beim Schritt des Berechnens der Differenz ($\Delta$(P/T)) erhalten werden, eine obere Schwelle ($S_1$) und eine untere Schwelle ($S_2$) bestimmt, zwischen denen jeder Wert der Differenz ($\Delta$(P/T)) nicht als eine thermische Anomalie erachtet wird.

9. Lokalisierungsverfahren nach dem vorhergehenden Anspruch, wobei die untere und obere Schwelle ($S_1$, $S_2$) plus oder minus einem Faktor F entsprechen, der mit der Standardabweichung ($\sigma$) der Werte multipliziert wird, die beim Schritt des Berechnens der Differenz ($\Delta$(P/T)) erhalten werden, wobei der Faktor F zwischen 1 und 4 liegt.

10. Lokalisierungsverfahren nach Anspruch 4, das wenigstens einmal wiederholt wird, um die Bedingungen des Rollens der montierten Einheiten (3) zu ändern, wobei der Schritt des statistischen Diskriminierens die folgenden Phasen aufweist:

   - Zusammenstellen der Kurven für jede Wiederholung des Verfahrens;
   - Berechnen des Mittelwerts ($\bar{x}$) und der Standardabweichung ($\sigma$) der Differenz zwischen den Kurven für jede Wiederholung des Verfahrens;
   - Berechnen einer korrigierten Differenz durch Subtraktion der Differenzberechnung ($\Delta$(P/T)) der aktuellen Wiederholung von dem berechneten Mittelwert (x), dann durch Division dieser Subtraktion durch die berechnete Standardabweichung ($\sigma$), um die korrigierte Differenz zu bestimmen, die weniger empfindlich für die Wiederholbarkeit der Messungen und den Gebrauch des Fahrzeugs ist;
   - Bestimmen zweier Quantile ($q_\alpha$, $q_{1-\alpha}$) vorbestimmter Ordnungen ($\alpha$, $1-\alpha$) der korrigierten Differenzwerte;

- Nutzen der zwei Quantile $(q_\alpha, q_{1-\alpha})$ vorbestimmter Ordnungen $(\alpha, 1-\alpha)$ als eine obere Schwelle $(S_1)$ bzw. eine untere Schwelle $(S_2)$, zwischen denen jeder Wert der Differenz $(\Delta(P/T))$ nicht als eine thermische Anomalie erachtet wird.

11. Verfahren nach dem vorhergehenden Anspruch, wobei die vorbestimmten Ordnungen $(\alpha, 1-\alpha)$ zwischen $10^{-4}$ und $10^{-1}$ bzw. zwischen $1\text{-}10^{-4}$ und $1\text{-}10^{-1}$ liegen.

12. Lokalisierungsverfahren nach einem der Ansprüche 3 bis 11, aufweisend einen letzen Schritt des Sendens eines Alarms, wenn eine thermische Anomalie einer der montierten Einheiten (3) des Fahrzeugs bestimmt ist.

**Claims**

1. Method for detecting a thermal anomaly during running of a tyre-wheel assembly (3) of a vehicle (1) equipped with a mounting wheel (5) on which a pneumatic tyre (7) is mounted, **characterized in that** it comprises the following steps:

   - measuring the internal pressure (P) and temperature (T) of the tyre-wheel assembly (3) using a sensor (9) attached to the mounting wheel (5);
   - calculating a monitoring ratio (P/T) which is a function of the measured pressure (P) and of the measured temperature (T);
   - repeating the preceding steps and tracking the evolution in the value of the monitoring ratio in order to determine a thermal anomaly when the internal temperature of the tyre-wheel assembly (3) increases more rapidly than the internal pressure of the tyre-wheel assembly (3).

2. Detection method according to the preceding claim, wherein the monitoring ratio (P/T) corresponds to the ratio of the measured pressure (P) to the measured temperature (T).

3. Method for locating a thermal anomaly on tyre-wheel assemblies (3) of a vehicle (1), each of which is equipped with a mounting wheel (5) on which a pneumatic tyre (7) is mounted, **characterized in that** it comprises the following steps:

   - implementing the thermal anomaly detection method according to either one of the preceding claims on a reference set comprising at least one tyre-wheel assembly (3) selected from among the tyre-wheel assemblies (3) of the vehicle (1), the monitoring ratio (P/T) being a function of each of the tyre-wheel assemblies (3) of the reference set;
   - implementing the thermal anomaly detection method according to either one of the preceding claims on a comparison tyre-wheel assembly (3) of the vehicle (1) not belonging to the reference set;
   - calculating the difference (A(P/T)) between the monitoring ratios (P/T) of the reference set and of the tyre-wheel assembly (3) compared during iterations in order to determine whether a thermal anomaly is coming from the reference set or from the compared tyre-wheel assembly (3).

4. Location method according to the preceding claim, comprising, after the step of calculating the difference $(\Delta(P/T))$, a step of statistical discrimination making it possible, on the basis of the spread on the difference of the monitoring ratios (P/T) of the reference set and of the compared tyre-wheel assembly (3), to remove those thermal anomalies that are associated with the statistical variations.

5. Location method according to the preceding claim, wherein the statistical discrimination step comprises the following phases:

   - determining two quantiles $(q_\alpha, q_{1-\alpha})$ of predetermined orders $(\alpha, 1-\alpha)$ for the values obtained during the iterations of the step of calculating the difference $(\Delta(P/T))$ between the monitoring ratios (P/T) of the reference set and of the compared tyre-wheel assembly;
   - using the two quantiles $(q_\alpha, q_{1-\alpha})$ of predetermined orders $(\alpha, 1-\alpha)$ respectively as an upper threshold $(S_1)$ and as a lower threshold $(S_2)$ between which thresholds each value of the difference $(\Delta(P/T))$ is not considered to represent a thermal anomaly.

6. Method according to the preceding claim, wherein the predetermined orders $(\alpha, 1-\alpha)$ are respectively comprised between $10^{-4}$ and $10^{-1}$ and between $1\text{-}10^{-4}$ and $1\text{-}10^{-1}$.

7. Location method according to Claim 4, wherein the statistical discrimination step comprises the following phase:

   - calculating the standard deviation $(\sigma)$ for the values obtained during the iterations of the step of calculating the difference $(\Delta(P/T))$ between the monitoring ratios (P/T) of the reference set and of the compared tyre-wheel assembly.

8. Location method according to the preceding claim, wherein the statistical discrimination step determines, from the standard deviation $(\sigma)$ of the values obtained during the step of calculating the difference

($\Delta$(P/T)), an upper threshold ($S_1$) and a lower threshold ($S_2$) between which thresholds each value of the difference ($\Delta$(P/T)) is not considered to represent a thermal anomaly.

9. Location method according to the preceding claim, wherein the lower and upper thresholds ($S_1$, $S_2$) correspond to plus or minus a factor F multiplied by the standard deviation ($\sigma$) of the values obtained in the step of calculating the difference ($\Delta$(P/T)), the factor F being comprised between 1 and 4.

10. Location method according to Claim 4, which is repeated at least once in order to change the running conditions of the tyre-wheel assemblies (3), the statistical discrimination step comprising the following phases:

    - compiling the curves for each iteration of the method;
    - calculating the mean ($\bar{x}$) and the standard deviation ($\sigma$) of the difference between the curves for each iteration of the method;
    - calculating a corrected difference by subtracting the calculated difference ($\Delta$(P/T)) of the current iteration from the calculated mean value ($\bar{x}$), then by dividing this subtraction by the calculated standard deviation ($\sigma$) so as to determine the corrected difference which is less sensitive to the repeatability of the measurements and to the usage of the vehicle;
    - determining two quantiles $(q_{\alpha},\ q_{1-\alpha})$ of predetermined orders ($\alpha$, $1-\alpha$) for the corrected difference values;
    - using the two quantiles $(q_{\alpha},\ q_{1-\alpha})$ of predetermined orders ($\alpha$, $1-\alpha$) respectively as an upper threshold ($S_1$) and as a lower threshold ($S_2$) between which thresholds each value of the difference ($\Delta$(P/T)) is not considered to represent a thermal anomaly.

11. Method according to the preceding claim, wherein the predetermined orders ($\alpha$, $1-\alpha$) are respectively comprised between $10^{-4}$ and $10^{-1}$ and between $1-10^{-4}$ and $1-10^{-1}$.

12. Location method according to any one of Claims 3 to 11, comprising a final step of issuing an alert when a thermal anomaly with one of the tyre-wheel assemblies (3) of the vehicle is determined.

**Fig. 1**

**Fig. 2**

**Fig. 3**

Fig. 4a

Fig. 4b

Fig. 4c

Fig. 5

Fig. 6

**Fig. 7**

**Fig. 8**

**EP 3 814 153 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015044553 A1
- FR 2680135 A1
- US 2013274988 A1